# EUROPEAN PATENT APPLICATION

(11) **EP 1 833 233 A1**
(43) Date of publication of application: **12.09.2007**
(21) Application number: 07102796.5
(22) Date of filing: 21.02.2007
(51) Int. Cl.: H04M 1/247, G06F 3/048

(54) **Method and device for providing quick menu in menu screen of mobile communication terminal**

(30) Priority: 07.03.2006 KR 20060021513
(71) Applicant: Samsung Electronics Co., Ltd., Suwon-si, Gyeonggi-Do (KR)
(72) Inventor: Lim, Dok-Shin c/o Samsung Electronics Co., Ltd., Gyeonggi-do (KR); Shin, Young-Sun c/o Samsung Electronics Co., Ltd., Gyeonggi-do (KR); Hwang, Byeong-Cheol c/o Samsung Electronics Co., Ltd., Gyeonggi-do (KR)
(74) Representative: Weigelt, Udo

(57) **Abstract**

Disclosed is a device and method for providing a quick menu in a menu screen of a mobile communication terminal. The method and device allow a user to more easily utilize the menu frequently employed in menu screen, and to execute the functions of the quick menu. The method for providing a quick menu in a menu screen of the mobile communication terminal displaying many menu items, which includes, if there is a move of a focus marking the menu item according to the user's input, displaying an auxiliary display area, which displays at least one shortcut menu item for the purpose of carrying out the quick menu corresponding to the menu item in which the focus is located; checking whether the user selects the shortcut menu item in the auxiliary display area; and converting the current screen into the screen for executing the selected shortcut menu item, if there is a selection of the shortcut menu item as a result of checking.

## Description

The present invention relates to a mobile communication terminal, and more particularly to a method and device for providing a quick menu in a menu screen of a mobile communication terminal.

Generally, a mobile communication terminal processes user information and provides various functions according to user's desire. It is customary to perform such functions by carrying out corresponding functions according to input of menu selection. According to the method, a user first appoints a menu corresponding to a predetermined function, and the appointed menu is then displayed by input of a predetermined request from the user. Then, if the user selects the corresponding menu, the predetermined function according to the menu selected by the user is performed. Moreover, according to a lately employed method, in order to perform functions through menu selection, each menu is formed into an icon, so that the user can select an icon that he/she wants, and a function corresponding to the selected icon is then executed. This method is suggested in order to provide users with improved convenience.

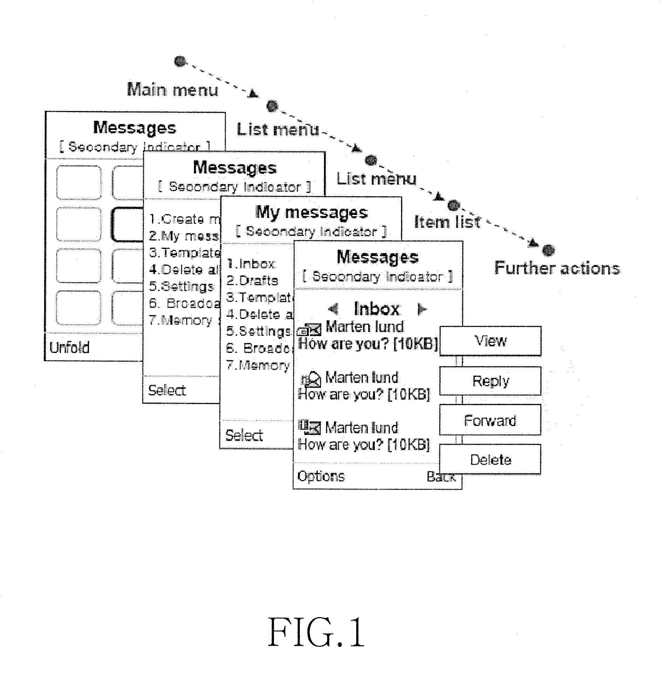

As shown in FIG. 1, a type of main menu screen of a conventional mobile communication terminal is a tile-type, and an icon, for example, of a corresponding menu item is displayed on each tile.

FIG. 1 illustrates a process of moving movement from a superordinate menu to a subordinate menu of the normal mobile communication terminal. A main menu screen is provided to the user as shown in FIG. 1. The main menu changes an edge color of the tile corresponding to the menu item according to the user's selection or shadows the corresponding tile by using a focus, and allows the user to select the menu item that he/she at presently desires by moving the corresponding focus.

As described above, it is necessary for the user to go through a process of moving from the superordinate menu to the subordinate menu in order to be able to search for functions that he/she wants in the mobile communication terminal. For example, as shown in FIG 1, the user has to move to the final subordinate menu in which received messages are displayed in order to check the received messages. Only after the user moves to the final subordinate menu can he/she finally select an action that he/she wants among actions such as View, Reply, Forward, Delete, and the like.

However, the more varied menu options that mobile communication terminal provides are, the more complicated the process is for the user to move from the superordinate menu to the subordinate menu, requiring navigation through several depths in order to find the menu that he/she wants.

As described above, hitherto, a user can access the menu that he/she wants only when he/she goes through complicated processes of menu selection every time. Therefore, the convenience for users must be considered when a menu item is displayed in the menu screen.

Accordingly, the present invention has been developed to solve the above-mentioned problem occurring in the art, and it is the object of the present invention to provide a method and device for providing a quick menu in a menu screen of a mobile communication terminal, which allows a user to more easily utilize the menu frequently employed in the menu screen, and which executes the functions of the quick menu.

This object is solved by the subject matter of the independent claims.

Preferred embodiments are defined in the dependent claims.

In order to accomplish the object of the present invention, there is provided a method for providing a quick menu in a menu screen of the mobile communication terminal displaying many menu items, which includes, if there is a move of a focus marking the menu item according to the user's input, displaying an auxiliary display area, which displays at least one shortcut menu item for the purpose of carrying out the quick menu corresponding to the menu item in which the focus is located; checking whether the user selects the shortcut menu item in the auxiliary display area; and converting the current screen into the screen for executing the selected shortcut menu item, if there is a selection of the shortcut menu as a result of checking.

Further, there is provided a device for providing a quick menu in a menu screen of the mobile communication terminal displaying many menu items, the device including a memory for storing at least one shortcut menu item for executing the quick menu by each menu item; a control unit for, if there is a move of the focus marking the menu item according to the user's input, extracting the shortcut menu items of the menu items from the memory mentioned above to display the extracted shortcut menu items on the auxiliary display area corresponding to the menu item in which the focus is located, and if there is one selection among the shortcut menu items, converting the current screen into the screen for executing the selected shortcut menu item; and a display unit for displaying the auxiliary display area on the menu screen under the control of the control unit and the screen for executing the selected shortcut menu item.

The present invention will be more apparent from the following detailed description taken in conjunction with the accompanying drawings, in which:
FIG. 1 illustrates a process of moving from a superordinate menu to the final subordinate menu of a conventional mobile communication terminal;
FIG. 2 showing a mobile communication terminal according to the present invention;
FIG. 3 illustrates a screen for providing a quick menu according to the present invention;
FIG. 4 illustrates a screen according to the conversion of the display scheme of an auxiliary display area according to the present invention;
FIG. 5 illustrates a method of providing a shortened path in a menu screen according to the present invention; and
FIG. 6 is a flowchart illustrating operations for a method of providing a quick menu in the menu screen according to the present invention.

Hereinafter, preferred embodiments of the present invention will be described in detail with reference to the accompanying drawings. The same reference numerals are used to denote the same structural elements throughout the drawings. In the following description of the present invention, the detailed description of known functions and configurations incorporated herein is omitted to avoid making the subject matter of the present invention unclear.

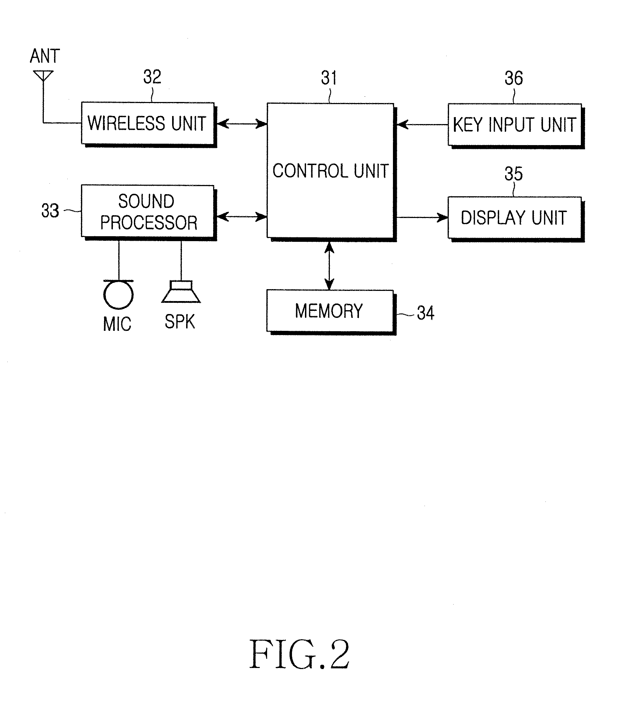

FIG. 2 illustrates a mobile communication terminal to which the present invention is applied, the mobile communication terminal includes a control unit 31, a wireless unit 32, a sound processor 33, a memory 34, a key input unit 36, and a display unit 35.

Here, the control unit 31 performs the overall control operations of the mobile communication terminal, and particularly performs control such that at least one shortcut menu item corresponding to the menu item is displayed through the display unit 35. Normally, a shortcut refers to the quick execution of certain programs or folders. The shortcut menu item of the present invention corresponds to a menu for moving to the menu which a user frequently utilizes the most. Here, the most frequently used menu is changeable by selection of a user, a service provider or a terminal manufacturer etc.

Specifically, if the focus marking of the menu item according to a user's input is located in the area where a specific menu item is displayed, the control unit 31 extracts a shortcut menu item to the menu item from the memory 34 to display the shortcut menu item on an auxiliary display area corresponding to the menu item in which the focus is located. For example, if a focus is situated in the area where a call log menu item is displayed according to direction key inputs by the user, the shortcut menu item with high preference by users is displayed corresponding to the call log menu item, and under this condition, if there are additional direction key inputs by the user, the focus moves to the area where another menu item is displayed to mark the shortcut menu item for the moved menu item by the focus. Accordingly, the user can mark the menu item by just moving only the focus among the menu items with change of the shortcut menu item corresponding to the menu item moved, without directly selecting the menu item.

If one of the shortcut menu items is actually selected by the user, the control unit 31 then converts the screen into a screen for executing the selected shortcut menu item. Similarly, if one of the lists of the user log displayed together with the shortcut menu item is selected, the control unit 31 also converts the screen into a screen for displaying detailed log information on the selected list of the user log. Here, the list of the user log refers to generated data according to usage of each menu item, and is displayed in the latest data order. For instance, in the case of executing a voice call function, pieces of call log information such as a called number, a calling number, and an absence number, etc. are generated, and the pieces of call log information are collected to become a list of the user log.

The wireless unit 32, connected to the control unit 31, converts voice data and control data into radio signals for transmission, and receives radio signals for conversion into voice data and control data.

The sound processor 33, connected to the control unit 31, converts the voice data from the control unit 31 into audible sounds to output through speakers. The sound processor 33 also sets up voice signals from a microphone to data and transmits to the control unit 31.

The memory 34 includes a Read Only Memory (ROM) for storing programs and data, a Random Access Memory (RAM) and the like, for storing data, etc. for displaying the shortcut menu item corresponding to each menu item according to the present invention. Further, the memory 34 stores a list of the user log corresponding to each menu item as well as at least one shortcut menu item for carrying out the quick menu for each menu item. At this time, the memory 34 stores at least one list of the user log, that is, data created according to menu item usage by each menu item in up-to-date order.

The key input unit 36 is connected to the control unit 31 and includes several number and character keys. According to present invention, the key input unit 36 performs a function of transmitting control signals of menu item focus for moving and selection by the user.

The display unit 35 includes a display device, such as a Liquid Crystal Display (LCD), and displays the menu items according to the present invention. Furthermore, when the display unit 35 is a touch-screen type, it performs a function to transmit control signals of menu item focus move and selection by the user to the control unit 31 just as the key input unit 36 does.

When the display unit 35 displays the menu screen, it displays at least one shortcut menu item corresponding to the current menu item, which have been moved with the focus together according to the move by the user among the menu items under the control of the control unit 31. It is possible to output the shortcut menu item in the various ways, such as a popup window. On the other hand, it is also possible to display the shortcut menu item and the list of the user log together in the menu screen. Here, the user log refers to data generated according to the menu item usage, for example, data generated according to the accomplishment of tasks such as edited data, received data, etc. by the user, and the list of the user log is displayed in up-to-date order.

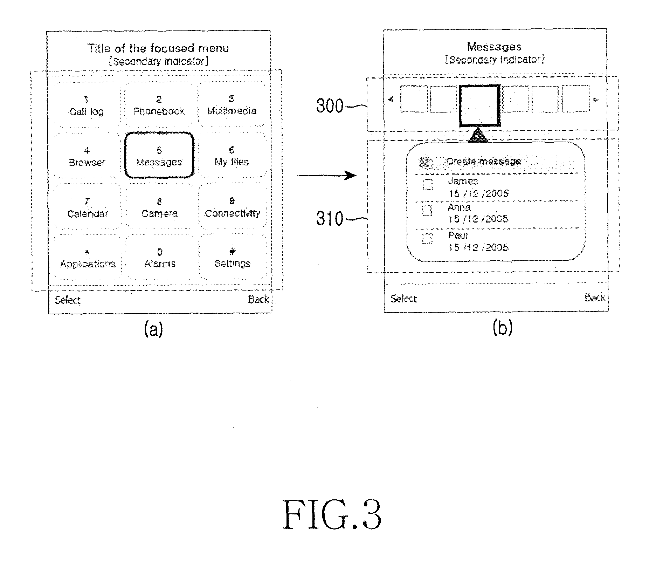

The menu screen to which the present invention is adopted is described in detail with reference to FIG. 3, which illustrates a screen for providing a quick menu according to the present invention. FIG. 3A illustrates a screen for displaying a normal main menu, and also illustrating tile-type of the menu item in a 3x4 keypad matrix. The tile-type menu items above can be organized as indicated by a mark 300, as shown in FIG. 3B.

In FIG. 3B, if the focus is located in the area where a specific menu item is displayed among the corresponding menu items, according to the input by the user, the edge of the corresponding menu item is changed, and the shortcut menu item and the list of the user log, which correspond to the menu item where the focus is located, are displayed as indicated by a mark 310. For example, when the focus lies in a message menu item, a message creation menu, which is the most used among the message menu items, is displayed as a shortcut menu item, and a message list which the user has recently received or transmitted is displayed as a list of the user log. One shortcut menu item and a list of the user log adopted from among the most utilized in response to the menu item in which the focus is located are illustrated in FIG. 3B. However, at least one shortcut menu item instead of the list of the user log can be also displayed by user focus.

The area where the shortcut menu and the list of user log are displayed is regarded as an auxiliary display area. At this time the auxiliary display area is not a fixed area but an area of which at least one of its size and location is variable, as an area where the shortcut menu item and the list of user log corresponding to each menu in which the focus is located, is displayed. A popup window type or slip dialog component and the like are available to implement the variable auxiliary display area. Herein, the slip dialog component refers to a dialog generated in a bottom-up way and an expanded component including a command bar.

More particularly, the mobile communication terminal is able to set the remaining area to an auxiliary display area, wherein the remaining area refers to the area other than the area where self status information (e.g., reception sensitivity, battery state, etc.) and the menu items are displayed, or make the remaining area displayed overlapping the tile-type menu items. That is to say, the mobile communication terminal allows the auxiliary display area to be displayed at the point where it is possible to visually distinguish the auxiliary display area from the menu items in the menu screen.

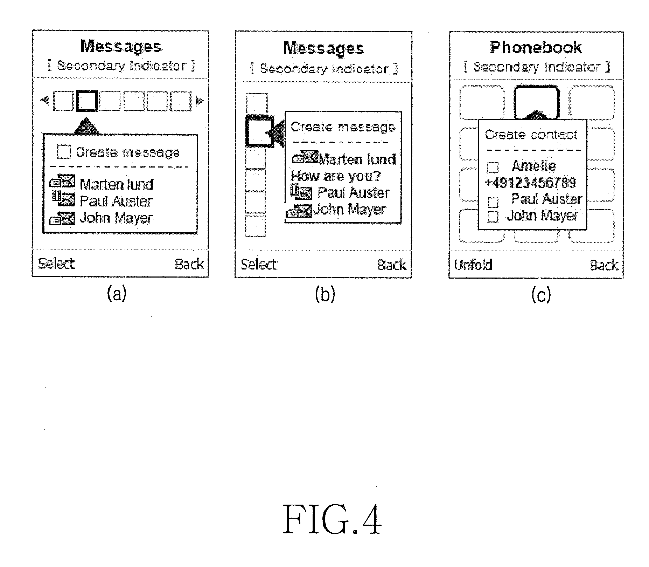

According to the present invention, the auxiliary display area shown by the move among the menu items can be altered and displayed in the various ways as illustrated in FIG. 4. FIG. 4 is a view illustrating a screen showing conversion of the display scheme of an auxiliary display area according to the present invention.

FIG. 4A illustrates horizontally arranging the menu items at the upper part of the screen and a view showing the auxiliary display area under the menu items, FIG. 4B illustrates vertically arranging the menu items at the edge of the screen and a view showing the auxiliary display area beside the menu items, and FIG. 4C illustrates a tile-type arrangement of menu items and an auxiliary display area overlapping the tile-type menu items. Variable changes can be realized according to selections by a user, a service provider or a terminal manufacturer. Additionally, the shortcut menu item according to the present invention is a fixed menu at the time of the launch of the mobile communication terminal or is also changeable according to the user's selection.

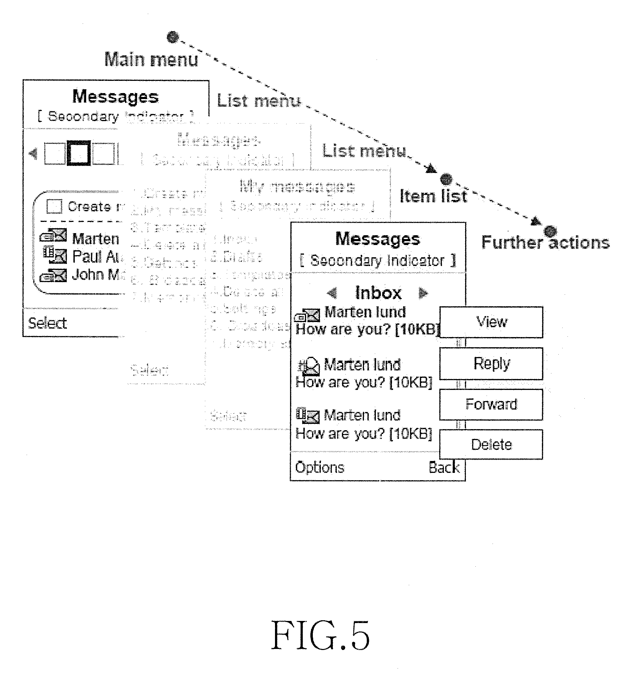

In the meantime, FIG. 5 illustrates a method of providing a shortened path in a menu screen according to the present invention.

Generally, when carrying out moves among menu items according to the direction key inputs by the user, the mobile communication terminal moves the focus displaying menu items together. At this moment, if the focus is situated in one specific area among areas where the menu items separated by menu articles are displayed, the mobile communication terminal according to the present invention then displays the shortcut menu item corresponding to the menu item and the list of user logs together. Here, the screen example of the mobile communication terminal is illustrated in FIG. 5. If the user selects the list of the user logs, then the message lists are displayed as illustrated in FIG. 5. Therefore, the user is able to select the actions which correspond to the messages. Using the shortened path described above, a user can directly access the shortcut menu item, i.e., the most frequently used menu item without traversing several intermediate menus, or easily check the list of the user log.

Meanwhile, if the focus is located in the message menu item, FIG. 5 shows a message creation menu and three message lists which the user has recently received or transmitted as a list of the user logs. In this manner, when the corresponding menu is used, if the log list is completed in the order of recently-generated data, it is displayed as many times as the predetermined number. For instance, it is possible that among the menu items, the number which has been recently received or transmitted in the call log, the phone numbers which have been recently stored in the phone book, the items such as music, video, broadcasting which have been recently used in the multimedia, urgent events based on the present time in the calendar, and recently created picture files in the camera, etc. can be a list of user logs.

The log list allows the user to select a new action in the log list without delay. For example, the user can select a counterpart in a call log and make a phone call or transmit messages to him/her immediately, and send the response message for the received message at once. Accordingly, it is possible for the user to access the menu that he/she wants in a quicker manner.

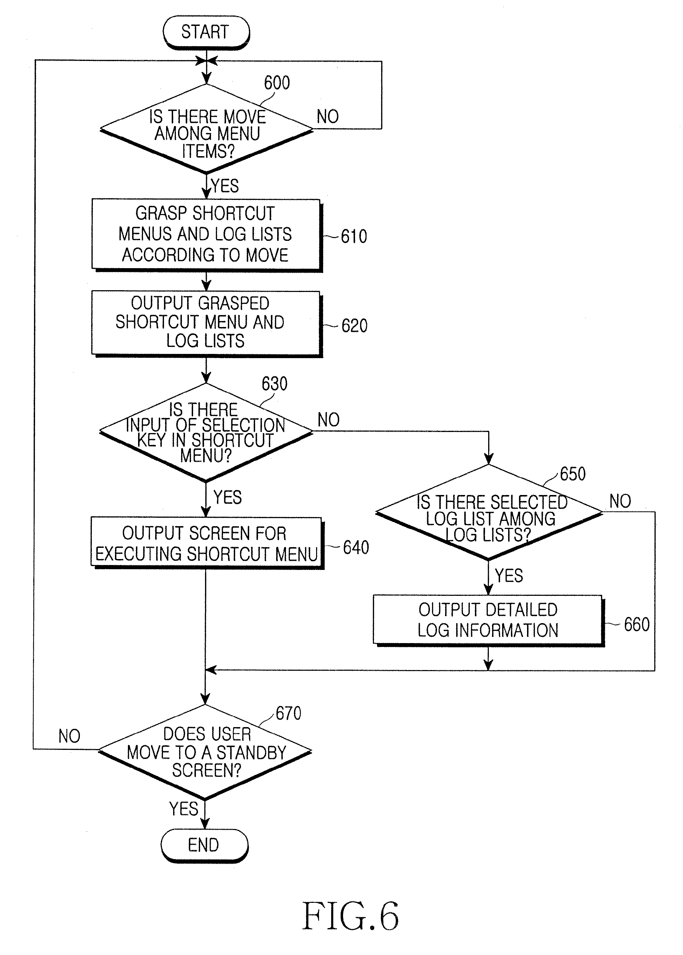

FIG. 6 is a flowchart illustrating operations for providing a quick menu in the menu screen according to the present invention. Furthermore, when the focus displaying the menu items moves from the area displaying the first menu item to the area displaying the second menu item, the menu for executing the quick menu of the second menu item is displayed as described below.

Among the menu items provided as shown in FIG. 3B, the mobile communication terminal determines whether moves are selected by direction key input from the user among existing menu items at step 600. If there are moves are determined at step 60, at step 610 the mobile communication terminal grasps the shortcut menu item and log list by the moves in the current menu items which have moved with the focus together at step 600, and outputs the shortcut menu item and the log list which have been grasped at step 620. For example, the mobile communication terminal outputs the auxiliary display area as shown in FIG. 3B.

The mobile communication terminal checks whether there exists an input of the selection key in the shortcut menu item in the auxiliary display area at step 630. If the input exists, the mobile communication terminal outputs the screen for executing the shortcut menu item at step 640. For instance, conversion from the menu screen to the screen for making messages is carried out.

When outputting the auxiliary display area, the mobile communication terminal determines whether there exists a selected log list among the log lists in the auxiliary display area at step 650. If it exists, the mobile communication terminal outputs the detailed log information at step 660. For example, the mobile communication terminal outputs the lists of the received or transmitted messages on the screen. Therefore, conversion from the menu screen to the screen for outputting the message log information is carried out.

In the meantime, the mobile communication terminal returns to step 600, and outputs the shortcut menu items and log lists according to the moves among the menu items so long as the user does not move to a standby screen at step 670.

Although the move and selection of menu item by using the "direction key" and "selection key" of the key input unit 36 have been illustrated, the quick menu of the present invention is not confined to this key input unit 36, and is also adoptable to a mobile communication terminal employing a touch screen. Further, even though FIG. 6 has illustrated outputting the shortcut menu item and log list at the same time, it is, of course, possible to output at least one shortcut menu item, i.e., only the menu item which the user frequently uses.

The present invention as described above effectively allows the user to notably shorten the path to the menu that the user wishes without complicated procedures for menu selection by proposing the method for providing the quick menu in the menu screen.

Additionally, there is an advantage in the present invention that allows the user to grasp the contents recently generated much quicker without practically selecting the corresponding menu, by displaying the quick menu and user log information in the menu screen of the mobile communication terminal in the move among menus by the user.

While the invention has been shown and described with reference to certain preferred embodiments thereof, it will be understood by those skilled in the art that various changes in form and details may be made therein without departing from the scope of the invention as defined by the appended claims.

## Claims

1. A method for providing a quick menu in a menu screen of a mobile communication terminal displaying a plurality of menu items, the method comprising the steps of:
displaying an auxiliary display area, if a focus marking a menu item according to a user's input is located in an area where a specific menu item is displayed, wherein the auxiliary display area displays at least one shortcut menu item corresponding to the menu item on which the focus is located;
checking whether the user selects the shortcut menu item in the auxiliary display area; and
converting a screen into a screen for executing the selected shortcut menu item, if there is a selection of the shortcut menu item as a result of the checking.

2. The method as claimed in claim 1, wherein the method further comprises displaying the shortcut menu item and a list of user logs corresponding to the menu items together on the auxiliary displaying area.

3. The method as claimed in claim 2, wherein the list of user logs corresponds to data generated according to menu item usage, and is displayed in latest data order.

4. The method as claimed in one of claims 1 to 3, wherein the auxiliary displaying area is displayed overlapping the menu screen, if the menu screen is made up of a plurality of tile-type menu items.

5. The method as claimed in one of claims 1 to 3, wherein the auxiliary displaying area is displayed in a popup type window under the menu item in which the focus is located, if the menu items are horizontally arranged at an upper screen part.

6. The method as claimed in one of claims 1 to 3, wherein the auxiliary displaying area is displayed in a popup type window beside the menu item in which the focus is located, if the menu items are vertically arranged at a screen edge.

7. The method as claimed in claim 2, wherein the method further comprises converting into a screen for displaying detailed log information on the selected list of the user log, if one of the lists of the user log is selected.

8. A device for providing a quick menu in a menu screen of a mobile communication terminal displaying a plurality of menu items, the device comprising:
a memory for storing at least one shortcut menu item corresponding to each menu item;
a control unit for, if a focus marking a menu item according to a user's input is located in an area where a specific menu item is displayed, extracting at least one shortcut menu item for the menu item from the memory to display the extracted at least one shortcut menu item on an auxiliary display area corresponding to the menu item in which the focus is located, and, if there is a selected one among the shortcut menu items, converting into a screen for executing the selected menu; and
a display unit for displaying the auxiliary display area on the menu screen under the control of the control unit and the screen for executing the selected shortcut menu item.

9. The device as claimed in claim 8, wherein the memory stores in up-to-date order at least one user log list corresponding to data created according to menu item usage by each menu item.

10. The device as claimed in claim 9, wherein the control unit displays the shortcut menu item and the user log list extracted from the memory together on the auxiliary displaying area in up-to-date order.

11. The device as claimed in one of claims 8 to 10, wherein the control unit allows the auxiliary display area to be displayed overlapping the menu screen on the display unit, if the menu screen has been made up of a plurality of tile-type menu items.

12. The device as claimed in one of claims 8 to 10, wherein the control unit allows the auxiliary display area to be displayed at a point allowing visually distinguishing the auxiliary display area from menu items in the menu screen.

13. The device as claimed in claim 9, wherein the control unit converts the screen into a screen for displaying detailed log information on the selected lists of user logs, if one of the lists of user logs is selected.
